# EUROPEAN PATENT SPECIFICATION

(11) **EP 3 046 659 B1**
(45) Date of publication and mention of the grant of the patent: **20.05.2020**
(21) Application number: 14777441.8
(22) Date of filing: 13.09.2014
(51) Int. Cl.: B01D 61/36, B01D 63/02

(54) **USE OF A HOLLOW FIBRE MEMBRANE MODULE WITH IMPROVED FLUID FLOW DISTRIBUTION FOR OSMOTIC MEMBRANE DISTILLATION**
VERWENDUNG EINES HOHLFASERMEMBRANMODULS MIT VERBESSERTER FLUIDSTROMVERTEILUNG ZUR OSMOTISCHEN MEMBRANDESTILLATION
UTILISATION D'UN MODULE À MEMBRANE À FIBRES CREUSES PERMETTANT UNE MEILLEURE RÉPARTITION DE L'ÉCOULEMENT DU FLUIDE POUR LA DISTILLATION À MEMBRANE OSMOTIQUE

(30) Priority: 18.09.2013 US 201361879291 P
(43) Date of publication of application: 27.07.2016
(73) Proprietor: Chemetics Inc., Vancouver, British Columbia V5M 0A5 (CA)
(72) Inventor: LASHKARI, Siamak, Vancouver, British Columbia V6B 0B5 (CA); DRACKETT, Thomas, North Vancouver, British Columbia V7K 2R3 (CA); WEST, Taleitha, Vancouver, British Columbia V6E 4R8 (CA); FAN, Yaoguo, Vancouver, British Columbia V5X 1Z5 (CA); MOK, Felix, Vancouver, British Columbia V5R 4M2 (CA)
(74) Representative: Beyer, Andreas
(86) International application number: PCT/US2014/055538
(87) International publication number: WO 2015/041961

(56) References cited:
- EP-A1- 2 586 520
- EP-A2- 0 089 122
- DE-A1-102004 022 310
- JP-A- H02 102 660
- US-A- 5 264 171
- US-A1- 2003 047 077
- US-A1- 2005 269 266
- US-A1- 2011 036 240

## Description

### Technical Field

The present invention pertains to improved hollow fibre membrane modules for osmotic membrane distillation.

### Background

Hollow fibre membrane modules or contactors are devices used for separating a variety of components from numerous types of fluids or fluid mixtures. They can also be used as absorbers for various species and/or for heat exchange. A corresponding wide variety of hollow fibre membrane modules are available commercially for various separation and other applications. They generally comprise a plurality of hollow fibre membranes or lumens arranged suitably in a housing. In separation applications, separation is accomplished by a membrane separation process, and the membrane materials and operating conditions (e.g. temperature, pressure) are chosen in accordance with the membrane separation process and species involved. Numerous membrane separation processes are possible, including reverse osmosis, ultrafiltration, nanofiltration, microfiltration, vapour permeation, pervaporation, membrane distillation, and so on. Osmotic membrane distillation (OMD) is another candidate separation process that is receiving increased attention for industrial uses. For instance, WO2005/118114 teaches the benefits of using OMD for various industrial uses and particularly for use in electrolytic haloalkali production plants where reduced capital, operating re-concentration, and dilution costs can be achieved.

The membrane materials employed in such modules typically comprise one or more polymeric materials or composites. Further, the membranes may be microporous and/or chemically treated depending on the process and species to be separated. The hollow fibre membranes or lumens are arranged in the module with suitable seals provided so that fluid communication between the inside of the lumens and the outside of the lumens is prevented. The fluid or fluid mixture to be treated can then be directed over either the outer or inner surface of the lumens whereupon the species to be separated passes through the membranes and is collected and/or disposed from the other side of the lumens. Commonly the fluid is directed over the outside of the lumens in a configuration known as the shell-side configuration (because the fluid is on the same side of the lumens as, and in common contact with, the shell of the housing).

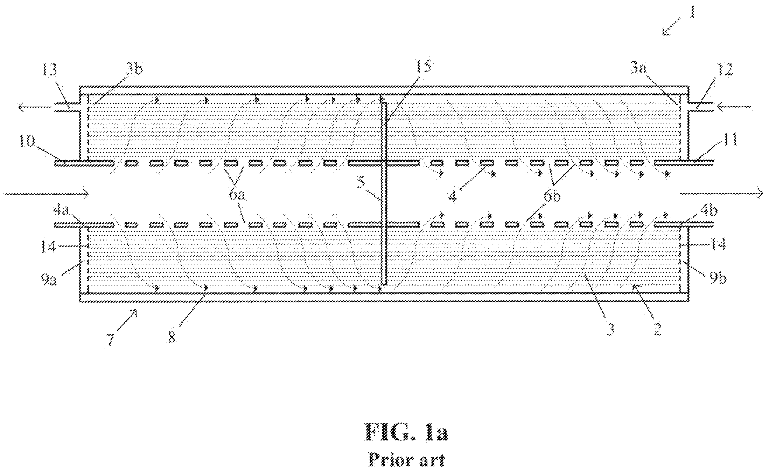

To make the most effective use of the membrane in shell-side configuration modules, it is desirable to bathe the entire external surface of the lumens as uniformly, and with as much of the supplied fluid as possible while the fluid traverses the module. Various designs and configurations have thus been considered in the art in order to improve the fluid flow distribution in this regard. For instance, US 5,264,171 discloses various designs for spiral-type hollow fibre membrane modules containing flow-directing baffles which are axially positioned to promote improved radial flow of fluids throughout the hollow fibre bundle. A common present-day commercial hollow fibre membrane module employs a similar such shell-side configuration design. The common commercial module comprises a hollow fibre bundle, a hollow internal core in the centre of the bundle, and a central baffle in the bundle. The internal core is perforated and has a plug located at its centre. When fluid is supplied to an inlet of the module, it is first directed to an end of the internal core. The presence of the plug forces all the fluid to flow radially outward through the perforations in the internal core and over the lumen surfaces in the inlet side of the module. The fluid then flows around the central baffle, over the lumen surfaces in the outlet side of the module, and back through the perforations into the internal core. Thus, the presence of these features establishes a cross-flow pattern in the hollow fibre bundle. Thereafter, fluids exits the module through an outlet connected to the other end of the internal core. (This common commercial module is illustrated in Figure 1a and is described in more detail below.)

US 2011/0036240 A1 relates to an improved liquid degassing membrane contactor or module including a high pressure housing and at least one degassing cartridge therein. It may be preferred that the high pressure housing is a standard, ASME certified, reverse osmosis (RO) or water purification pressure housing or vessel (made of, for example, polypropylene, polycarbonate, stainless steel, corrosion resistant filament wound fiberglass reinforced epoxy tubing, with pressure ratings of, for example, 150, 250, 300, 400, or 600 psi, and with, for example 4 or 6 ports, and an end cap at each end) and that the degassing cartridge is a self-contained, hollow-fiber membrane cartridge adapted to fit in the RO high pressure housing.

There still remains a need however to improve fluid flow distribution within such modules in order to increase efficiency and performance and to maximize utilisation of the often expensive membrane surface available inside. Preferably this is done in as compact and simple a manner as possible. The present invention addresses these needs and provides other benefits as disclosed below.

### Summary

Surprisingly it has been discovered that incorporating appropriate flow distributors in the hollow internal core of hollow fibre membrane modules can result in a worthy improvement in fluid flow distribution over the fibre bundle without unacceptable adverse consequences, and particularly without an unacceptable increase in pressure drop. The use of such flow distributors does not increase module size and is a relatively simple and effective modification to the module fabrication and assembly.

The present invention is defined by independent claim 1. Specific embodiments are defined by the dependent claims.

In a basic embodiment, the hollow fibre membrane module used for membrane distillation has a shell-side configuration and comprises a hollow fibre bundle comprising a plurality of hollow fibre membranes, a perforated hollow internal core inside the bundle (e.g. in the centre), and at least one bundle baffle within the hollow fibre bundle. There is at least one plug located part way within the internal core and there is at least one perforation on either side of the plug. The module further comprises a housing comprising a shell, shell ends, a shell inlet for a shell fluid (e.g. fluid supplied to the module), a shell outlet for the shell fluid, and a lumen outlet for a lumen fluid (e.g. fluid separated from the shell fluid by the membranes). The housing contains the hollow fibre bundle and internal core. The shell inlet is fluidly connected to one end of the internal core, and the shell outlet is fluidly connected to the other end of the internal core. The lumen outlet is fluidly connected to an end of each hollow fibre membrane. Suitable seals are provided within the housing and prevent fluid communication between the shell fluid and the lumen fluid. The bundle baffle within the hollow fibre bundle is located between at least one perforation on the shell inlet side of the internal core and at least one perforation on the shell outlet side of the internal core. And in accordance with the invention, the internal core comprises at least one flow distributor.

In certain embodiments, it can be desirable to allow lumen fluid to exit from both ends of the hollow fibre lumens. Alternatively, it can be desirable to provide an external flow of fluid through the hollow fibre lumens in order to absorb and/or carry away species separated from the shell fluid. The housing in such embodiments therefore comprises a lumen inlet for the lumen fluid and the lumen inlet is fluidly connected to the other end of each hollow fibre membrane.

The plug and the bundle baffle need not be aligned and neither need be centrally located in the module. However, in certain embodiments this can be preferred. In other embodiments, more than one plug may be employed (with appropriate additional perforations in the internal core) and more than one bundle baffle may also be employed.

More than one flow distributor may be employed in the internal core. For instance, the internal core can comprise at least one flow distributor on each side of the plug. This can provide for improved flow distribution on either side of the plug. Further, the internal core can comprise more than one flow distributor in series on the shell inlet side of the plug. These flow distributors in series can provide an increasing restriction to flow in the direction from the shell inlet to the plug. When properly arranged, these flow distributors (restrictors) advantageously improve fluid flow distribution by directing flow into the bundle more evenly. In a like manner, the internal core can comprise more than one flow distributor in series on the shell outlet side of the plug. And as above, the flow modification provided by these series flow distributors can provide an increasing restriction to flow in the direction from the plug to the shell outlet and thereby advantageously improve fluid flow distribution in the bundle.

Several different types of flow distributors may be considered. For instance, the flow distributor comprises a core baffle which obstructs flow. Such a flow distributor can further comprise locating tabs attached to the periphery of the core baffle in order to locate the core baffle centrally with respect to the walls of the internal core. A particularly suitable core baffle is double cone shaped in which the axes of the cones are aligned along the axis of the internal core. The angles of suitable double cones with respect to the cone axes can be about 30 degrees. Other types of flow distributors which may be employed include an orifice plate or plates located against the inner wall of the internal core, or helical-shaped flow distributors.

The flow distributor or distributors are located in the internal core to provide effective improved fluid flow distribution in the fibre bundle. While the preferred location or locations vary from case to case, an effective location in the Examples below was at about 1/6 of the distance between the shell inlet and the plug in the internal core. A tie rod or other similar mechanical device may be used to connect the flow distributor to the plug and thereby serve to locate the flow distributor as desired.

In combination with the present invention, the configuration of the perforations in the internal core can also be varied if desired to improve the fluid flow distribution. For instance, the perforations in the internal core can be asymmetric on opposite sides of the plug, and the perforations need not be uniform on the same side of the plug (i.e. can be of different sizes or shapes). And if desired, the packing density of the hollow membrane fibres can be made to be lower at the centre of the bundle than at the perimeter of the bundle.

The hollow fibre membrane modules of the invention can be used for various industrial and other applications. An exemplary application is for the osmotic membrane distillation of a fluid in which use of a flow distributor might be expected to lead to improvement given the flow rates, pressures, and other operating conditions typically encountered in such a separation process.

### Brief Description of the Drawings

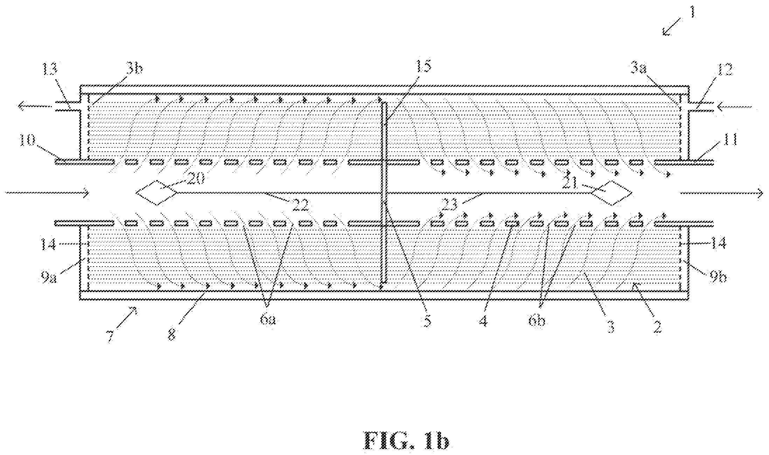

Figure 1a shows a schematic side cross-section view of a prior art hollow fibre membrane module having a shell-side configuration. Figure 1b shows a schematic side cross-section view of a similar hollow fibre membrane module except that it additionally includes double cone shaped baffles in the internal core on each side of the plug.

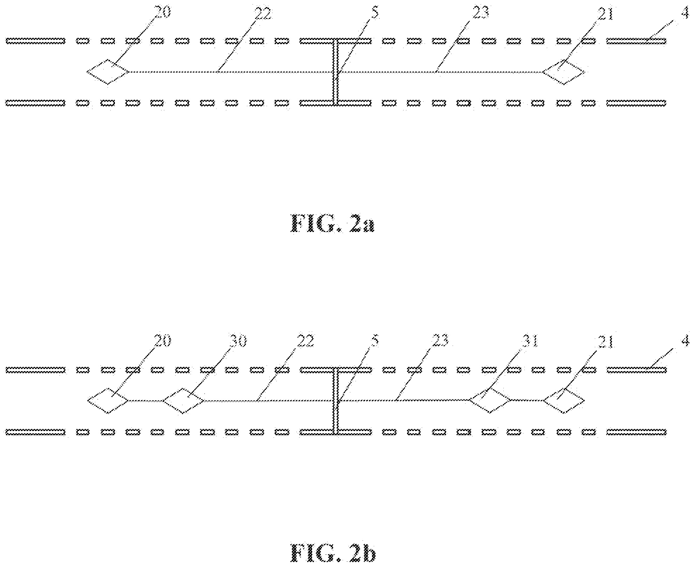

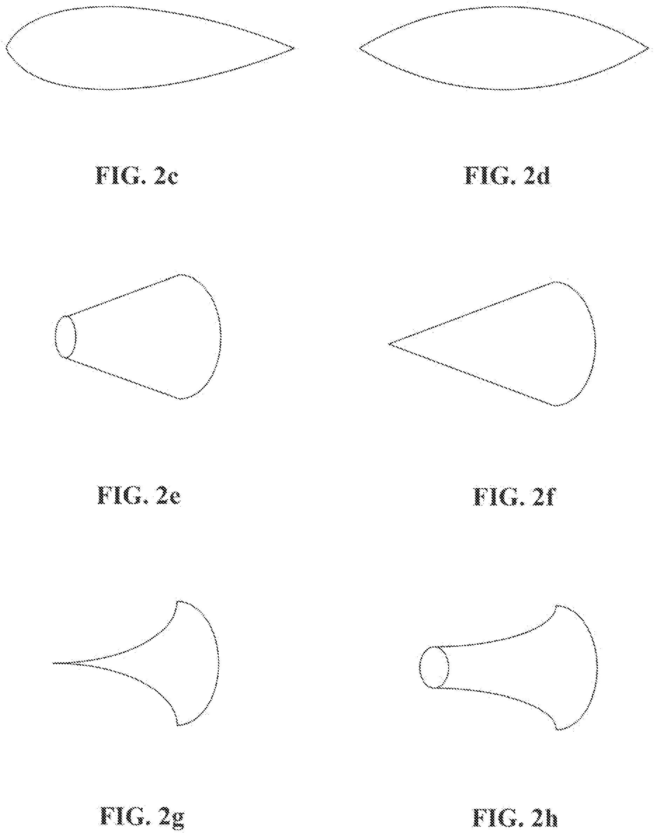

Figures 2a to 2h illustrate various embodiments which may be considered for core baffles. Figure 2a shows a side cross-sectional view of an internal core comprising a double cone shaped baffle on each side of the plug and connected thereto with a tie rod. Figure 2b shows a similar view to Figure 2a except the embodiment comprises two double cone shaped baffles in series on each side of the plug. Figures 2c to 2h show side profiles of other possible core baffle shapes.

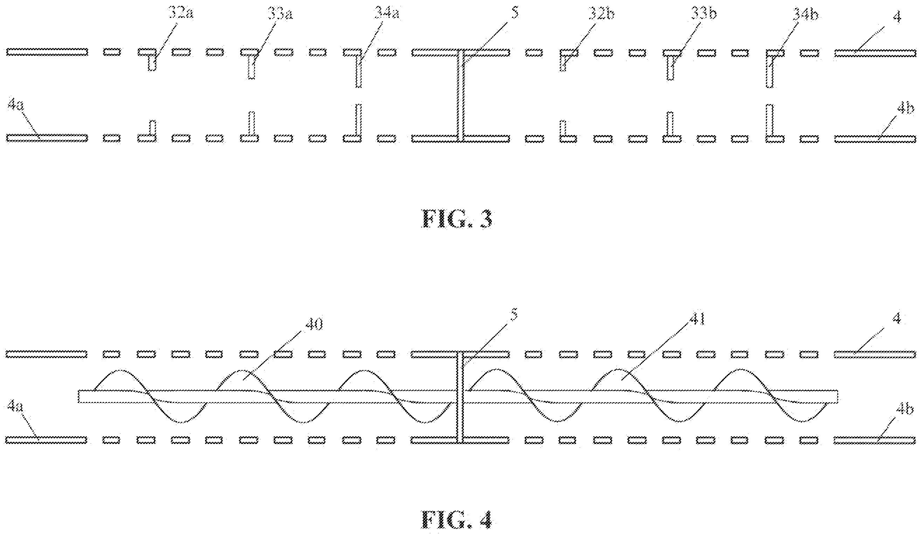

Figure 3 shows a side cross-sectional view of an internal core comprising a series of orifice plates on each side of the plug in which the flow restriction they provide increases in the direction from the shell inlet to the plug and then again (beyond the plug) from the plug to the shell outlet.
Figure 4 shows a side cross-sectional view of an internal core comprising a helical shaped baffle on each side of the plug and connected thereto.

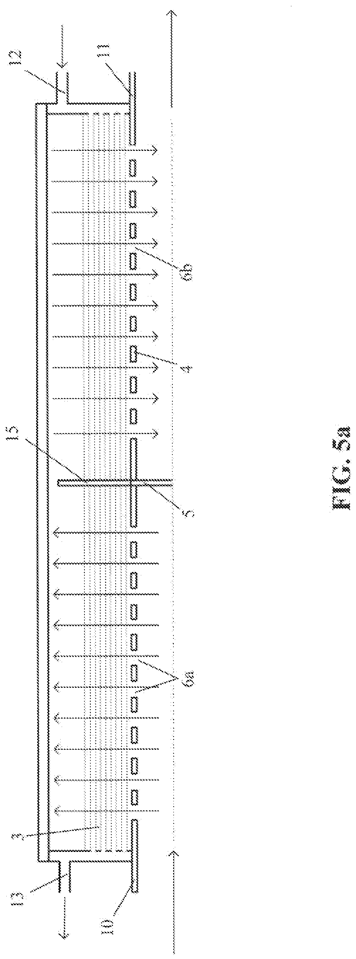

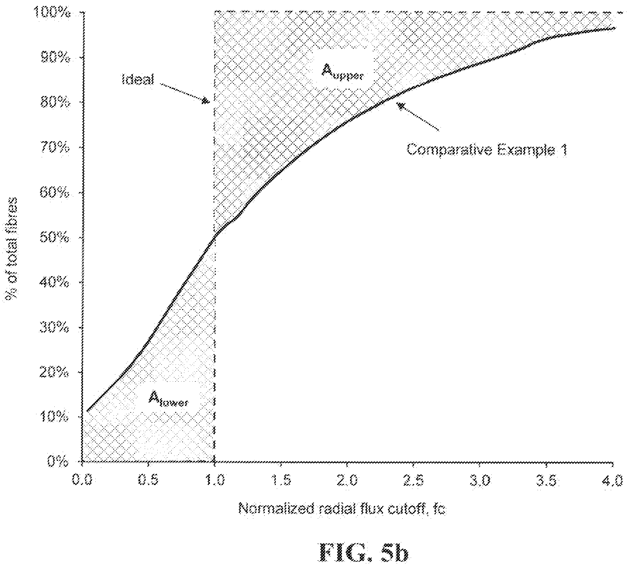

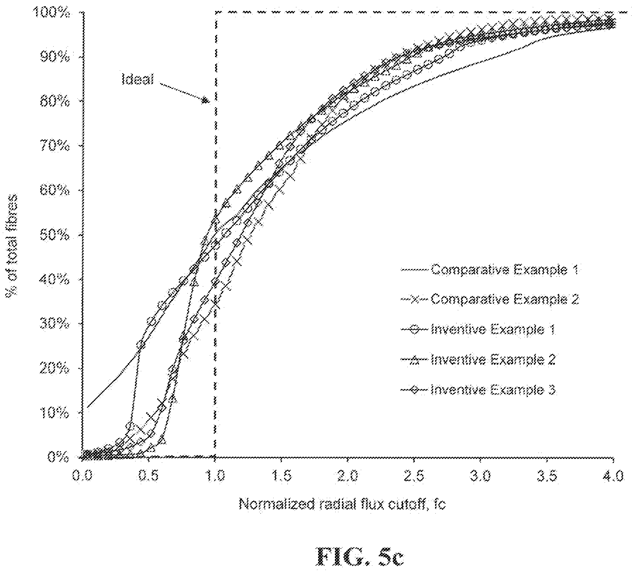

Figures 5a, b, and c relate to the modeling done in the first study in the Examples. Figure 5a illustrates the condition of uniform flow referred to in the Examples. Figure 5b illustrates the deficiency areas for the comparative commercial embodiment in the first study in the Examples. Figure 5c shows the modeled radial fluid flux distribution curves for the various embodiments in the first study in the Examples.

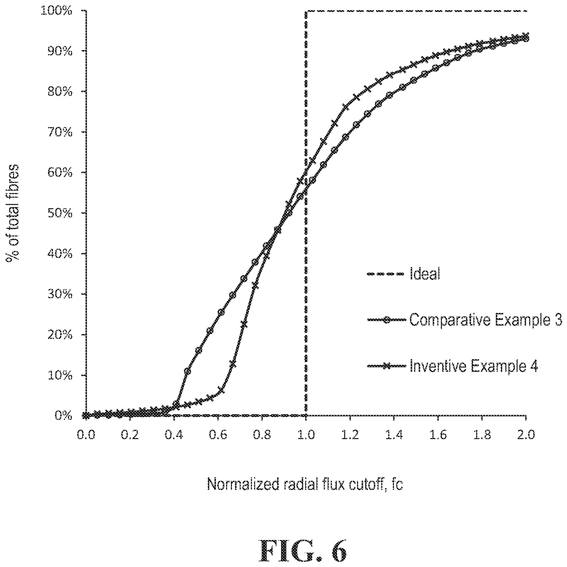

Figure 6 shows the modeled radial fluid flux distribution curves for the various embodiments in the second study in the Examples.

### Detailed Description

Unless the context requires otherwise, throughout this specification and claims, the words "comprise", "comprising" and the like are to be construed in an open, inclusive sense. The words "a", "an", and the like are to be considered as meaning at least one and are not limited to just one.

In a numerical context, the word "about" is to be construed as meaning plus or minus 10%.

Herein, a "flow distributor" refers to a structure which modifies fluid flow but does not completely block it. The structures can comprise various baffles, plates, orifices, helical-shapes, and the like or combinations thereof.

In reference to flow distributor shapes, "double cone shaped" refers to shapes described by two cones joined at common bases (and is not that of the rigorous mathematics definition with two cones joined at a common apex).

An "orifice plate" is a plate having an orifice of some kind in it.

A common present-day commercial hollow fibre membrane module is shown in the schematic side cross-section view of Figure 1a. Module 1 has a shell-side configuration and contains hollow fibre bundle 2 comprising a plurality of hollow fibre membranes 3 (also known as lumens). Hollow fibre bundle 2 is often conveniently prepared by spirally winding a sheet on which the numerous hollow fibre membranes 3 had previously been mounted. (In such embodiments, the hollow fibre membranes must be suitably rigid in order to be able perform this operation.) Alternatively, hollow fibre bundle 2 may be prepared using loose hollow fibre membranes that are weaved together at the ends and then rolled up. At the centre of hollow fibre bundle 2 is perforated hollow internal core 4, which has plug 5 in the middle thereof which blocks fluid flow through core 4. As shown internal core 4 has numerous perforations 6a, 6b in it to distribute fluid over hollow fibre bundle 2. Perforations 6a appear on the shell inlet side of internal core 4 and perforations 6b appear on the shell outlet side of internal core 4.

Module 1 comprises a housing 7 which includes shell 8, shell ends 9a, 9b, shell inlet 10, and shell outlet 11. Shell inlet 10 and shell outlet 11 are fluidly connected to internal core ends 4a and 4b respectively. Housing 7 also has lumen inlet 12 and lumen outlet 13 which are fluidly connected to lumen ends 3a and 3b respectively. Various seals 14 are used within housing 7 to prevent fluid communication between those fluids inside hollow membrane fibres 3 and those fluids outside hollow membrane fibres 3 and flowing through internal core 4.

Module 1 also comprises bundle baffle 15 which is located in the middle of fibre bundle 2 outside internal core 4 but is aligned with plug 5 in internal core 4. Bundle baffle 15 appears outside hollow fibre membranes 3 but not inside hollow fibre membranes 3. (Baffle structures like this can conveniently be created during assembly for instance if spirally wound sheets of flat-sheet microporous membranes are used by appropriate application of potting compound to the centre of the sheets before winding.)

In separation applications then, the fluid or fluid mixture to be treated is supplied as shell fluid at shell inlet 10. The shell fluid flows through the shell inlet side of internal core 4 and is distributed via perforations 6a over fibre bundle 2. Because the shell fluid cannot pass through plug 4 nor through bundle baffle 15, all the supplied shell fluid must flow over fibre bundle 2 on the shell inlet side and into the space between fibre bundle 2 and shell 8 before being directed around the edge of baffle bundle 15 to the shell outlet side of module 1. The arrows shown in Figure 1a are provided to give a qualitative indication of the direction and distribution of the shell fluid flow. While the design of module 1 provides for reasonable distribution of the shell fluid over fibre bundle 2 on the shell inlet side, the flow is not perfectly uniform and there are obvious regions where the flow is lower than average and thus the membrane surface here is not being used as efficiently as possible.

In a like manner, shell fluid on the shell outlet side of module 1 is directed over fibre bundle 2 and through perforations 6b into internal core 4 whereupon it exits shell outlet 11. Again, arrows are provided to give a qualitative indication of the direction and distribution of the shell fluid flow in this side of module 1.

As the shell fluid bathes the surfaces of hollow fibre membranes 3, membrane separation of the desired species from the shell fluid occurs, and these species pass through and into hollow fibre membranes or lumens 3. As shown, a lumen fluid is provided to absorb and/or carry away these separated species. Lumen fluid is provided at lumen inlet 12, is directed through hollow fibre membranes (lumens) 3, and then out through lumen outlet 13. (In other embodiments not shown here, a lumen fluid may not be needed and thus only a lumen outlet may be required in the module to remove the separated species therefrom. Alternatively, the separated species may be removed from both ends of the lumens, thus effectively using both lumen inlet and outlet 12, 13 in Figure 1a as outlets instead.)

In the present invention, the hollow fibre membrane module is similar to that shown in Figure 1a except that a flow distributor or flow distributors are incorporated into the internal core to improve flow distribution over the fibre bundle in the module. Figure 1b shows an inventive embodiment similar to that of Figure 1a except that double cone shaped core baffles 20, 21 are employed in internal core 4 on each side of plug 5. (In Figure 1b, like numerals are used to denote features common to those appearing in Figure 1a.) Tie rods 22 and 23 are used to connect core baffles 20 and 21 to plug 5 respectively and also serve to locate core baffles 20 and 21 along the centre axis of internal core 4. As illustrated qualitatively by the arrows in Figure 1b, the fluid flow distribution over the fibre bundle is improved. (In the Examples below, the improvement is confirmed under an exemplary set of conditions by computational fluid dynamics models.)

While the extent to which the flow distribution can be improved will be specific to a given embodiment and operating conditions, various other core baffle profiles are expected to be suitable for this purpose. Figures 2a to 2h illustrate some of the various embodiments which may be considered. Figure 2a shows a side cross-sectional view of the internal core of Figure 1a in which double cone shaped baffles 20, 21 appear on each side of plug 5 and are connected thereto with tie rods 22, 23 respectively. Figure 2b shows a similar view to Figure 2a except here there are two double cone shaped baffles in series on each side of plug 5 (i.e. core baffles 20 and 30 in series on the shell inlet side and core baffles 21 and 31 in series on the shell outlet side). Figures 2c to 2h show side profiles of other possible core baffle shapes (i.e. teardrop, football, truncated cone, single cone, spear point, and truncated spear point shapes respectively). In all these figures, the core baffle profiles are oriented for flow originating from left to right on the page.

Instead of core baffles, an orifice plate or plates may be used as the flow distributor. Figure 3 shows a side cross-sectional view of such an embodiment in which internal core 4 comprises a series of orifice plates with differing size orifices on each side of plug 5 (i.e. orifice plates 32a, 33a, and 34a in series on the shell inlet side and similarly sized orifice plates 32b, 33b, and 34b respectively in series on the shell outlet side). Here, each of the orifice plates in the series provides an increasing restriction to flow in the direction from shell inlet 10 to plug 5 and then again (beyond the plug) from plug 5 to shell outlet 11. This embodiment of Figure 3 exemplifies a desirable gradient for flow restriction then in internal core 4. In each section separated by plug 5, the back pressure provided by more restrictive orifice plates 34a and 34b increases fluid flow where it is desirably increased, namely through the perforations nearer shell inlet 10 and near bundle baffle 15 on the shell outlet side.

Further still, helical shaped baffles may be used instead of core baffles or orifice plates as are exemplified in Figures 2a-2h and 3 respectively. Figure 4 shows a side cross-sectional view of internal core 4 comprising exemplary helical shaped baffle 40, 41 connected to each side of plug 5 respectively. Helical shaped baffles promote radial turbulence in internal core 4 as well as providing flow restriction. Further, the shape of baffles 40, 41 may desirably be varied in the axial direction such that the flow restriction provided increases as illustrated by the series of orifice plates in Figure 3.

Selecting an appropriate flow distributor or series of flow distributors to improve fluid flow distribution in a given hollow fibre membrane module requires consideration of many factors, including the dimensions and component types in the module along with fluid properties and the operating conditions to be encountered. And depending on circumstances and if opportunity allows, it may be preferred to modify a module dimension (e.g. inner diameter of internal core) or operating condition (flow rate or pressure of the supplied shell fluid) because the combination of incorporated flow distributor and modified module or modified operating condition leads to greater improvement. While somewhat complex, those in the art are capable of such consideration and can be expected to arrive at appropriate selections using general engineering principles (such as heat and mass transfer, and fluid dynamics) and modeling (for instance as illustrated below).

The following Examples have been included to illustrate certain aspects of the invention but should not be construed as limiting in any way.

### Examples

In a first study, computation fluid dynamics (CFD) modeling was done on a conventional hollow fibre membrane module design as shown in Figure 1a and which might typically be used in a filtration application. CFD modeling was then done on a similar module in which the internal core perforations were modified and on several similar modules which incorporated various shaped flow distributors in the internal core.

In all cases, the fibre bundle was about 100 cm long and 18 cm in diameter and contained about 4800 PTFE fibres or lumens with an average outer diameter of 1.9 mm. The fibres were spirally wound around an internal core with an outside diameter of about 6.4 cm. The distance from each end of the internal core to the plug was about 50 cm. The internal core was perforated with staggered circular holes of 0.4 cm diameter such that 40% of the internal core surface was open. And this fibre bundle was housed in a shell with an inside diameter of 20 cm.

To simplify the calculations, the model was only applied to the shell inlet side of the module (i.e. the half of the module from shell inlet 10 up to plug 5 and bundle baffle 15). A porous media model was employed to further simplify the bundle simulation, although the inner rows of lumens were maintained with their actual dimensions in order to predict core-to-bundle flow with better accuracy. The shell side fluid was assumed to be 30% caustic solution at 80 °C, which might typically be treated by osmotic membrane distillation in industrial applications. With 10 m³/hour caustic feed assumed in the simulations, the flow was treated as turbulent in both the internal core and bundle regions.

The radial flux distribution of the supplied shell fluid for this conventional hollow fibre membrane module, Comparative Example 1, was determined and was compared to the ideal condition in which the
Radial flow is uniform at the same radial distance as fluid spreads out over the fibre bundle. Figure 5a illustrates this "ideal condition", which was used as a normalized base to facilitate comparison for actual flow distributions. At any point in the fibre bundle, the "normalized radial flux" is defined as the ratio of the actual radial flux to the value in the "ideal condition" illustrated in Figure 5a.

Figure 5b plots the model results of normalized radial flux for Comparative Example 1 and compares it to the ideal uniform flow condition. The x axis represents normalized radial flux cutoff values and the y axis represents the area % of fibres which are subjected to radial flow up to the normalized radial flux cutoff value. In the ideal case, the normalized radial flux is 1 throughout the bundle. Thus in Figure 5b, y is 0 up to a cutoff value of 1, and thereafter becomes 1, as represented by the dashed line in Figure 5b. In Comparative Example 1, about 25% of the fibres have normalized radial flux less than 0.5, and 50% of the fibres have normalized radial flux less than 1, or less than ideal. The cross-hatched deficiency area A_{lower} provides a quantitative measure to the overall distribution deficiency. In a like manner, the normalized radial flux in another fraction of the module is more than 1. The cross-hatched deficiency area Aᵤₚₚₑᵣ provides a quantitative measure to this type of distribution deficiency. The total Aₜₒₜₐₗ of these areas, A_{lower} + Aᵤₚₚₑᵣ, is representative of the extent of the nonuniformity of fluid flow in the module. And thus, the lower Aₜₒₜₐₗ is, the more uniform is the fluid flow.

The other module examples which were modeled included:
- Comparative Example 2; which was identical to Comparative Example 1 except that perforations were only present along the half of the internal core nearest the shell inlet. The half of the internal core nearest the plug had no perforations.
- Inventive Example 1; which was similar to Comparative Example 1 but which included a double shaped cone core baffle in the internal core as illustrated in Figure 2a. The double cone shaped core baffle was assumed to be about 8.5 cm long and the angles of the double cones with respect to the cone axis (and internal core axis) were 30 degrees. The core baffle was centred about 6.3 cm from the end of the internal core.
- Inventive Example 2; which was similar to Inventive Example 1 but which included an additional double shaped cone core baffle in series along the internal core as illustrated in Figure 2b. The gap between the two core baffles in series was about 2 cm.
- Inventive Example 3; which was similar to Comparative Example 1 but which included an inverted arrow head shaped core baffle in the internal core as illustrated in Figure 2a. The core baffle was again assumed to be about 8.5 cm long and centred about 6.3 cm from the end of the internal core. The arrow head faced the plug and had a profile where both the leading and trailing faces of the arrow head made an angle of 30 degrees with respect to the internal core axis.

Figure 5c plots the model results of normalized radial flux for all the various Example embodiments along with the ideal uniform flow condition. Table 1 below tabulates the numeric values obtained from these plots for the deficiency areas for the various Examples. The pressure drop from the shell inlet to the bundle baffle was also determined and presented in Table 1

**Table 1. Comparison of pressure drop and flow distributions**

| Example # | Pressure drop (inches water column) | % fibres with f_{c} < 0.5 | % fibres with f_{c} < 1.0 | A_{lower} | Aᵤₚₚₑᵣ | Aₜₒₜₐₗ |
|---|---|---|---|---|---|---|
| Comparative Example 1 | 10.7 | 23% | 46% | 0.30 | 0.57 | 0.87 |
| Comparative Example 2 | 13.5 | 6.5% | 32% | 0.14 | 0.48 | 0.62 |
| Inventive Example 1 | 12.1 | 19% | 44% | 0.25 | 0.51 | 0.76 |
| Inventive Example 2 | 12.4 | < 1% | 52% | 0.15 | 0.41 | 0.57 |
| Inventive Example 3 | 19.6 | 3.0% | 35% | 0.13 | 0.48 | 0.61 |

Out of all the module variations considered here, the results suggest that incorporating two double cone shaped core baffles in series (Inventive Example 2) should provide the best flow distribution since it has the lowest total deficiency area Aₜₒₜₐₗ. The module with the inverted arrow head core baffle (Inventive Example 3) had the lowest A_{lower} value and thus the fewest lumens with insufficient shell fluid flow. Modifying the perforation distribution could also significantly reduce the total deficiency area (comparing Comparative Example 2 to Comparative Example 1) and this suggests it may be advantageous to employ a combination of flow distributors and perforation modifications for the best possible flow distribution.

All the inventive examples showed an improvement in fluid flow distribution compared to the conventional module. In the embodiments employing the double cone shaped core baffles, a very modest increase in pressure drop is expected in the modules. Use of the inverted arrow head shape core baffle resulted in the greatest increase in pressure drop.

In a second study, an actual hollow fibre membrane module which might typically be used in a filtration application was built. The module had a similar layout to that shown in Figure 1a and the internal core of this module could incorporate various flow distributors for testing purposes. Initially, computation fluid dynamics (CFD) modeling was done as before for two instances using this hollow fibre membrane module design; namely a comparative module without any flow distributor in its internal core, and an inventive module in which three conic shaped flow distributors were incorporated in its internal core. The module was then actually tested using both these configurations to determine performance and to compare actual results to those predicted by CFD.

In both cases, the fibre bundle was about 108 cm long and 19.4 cm in diameter. Again, PTFE fibres having an average outer diameter of 1.9 mm were used. However, in this second study, the module contained about 3240 fibres compared to about 4800 used in the first study. The fibres were spirally wound around an internal core with an outside diameter of about 5.0 cm. The distance from each end of the internal core to the plug and bundle baffle was about 51.3 cm. The internal core was perforated with staggered circular holes of 0.4 cm diameter such that 50% of the internal core surface was open. And this fibre bundle was housed in a shell with an inside diameter of 19.6 cm.

The comparative module here, i.e. Comparative Example 3, had no flow distributors in the internal core. The inventive module here, i.e. Inventive Example 4, included a flow distributor in the internal core comprising three double truncated cone shaped core baffles in series. Here, each of the truncated double cone shaped core baffles comprised a short cylindrical section in its centre. Specifically, these core baffles were assumed to be about 6.5 cm long. The central cylindrical section was 1.7 cm long. And the angles of the double cones with respect to the cone axis (and internal core axis) were again 30 degrees. The first core baffle was centred about 5.2 cm from the end of the internal core. The gap between the subsequent core baffles in series was about 7.5 cm.

As before, to simplify the calculations, the model was only applied to the shell inlet side of the module. And a porous media model was employed to further simplify the bundle simulation, although again the inner rows of lumens were maintained with their actual dimensions in order to predict core-to-bundle flow with better accuracy. The shell side fluid was again assumed to be 30% caustic solution at 80 °C and the flow was treated as turbulent in both the internal core and bundle regions. Here however, 12 m³/hour caustic feed was assumed in the simulations.

Again, normalized radial flux was determined in each case and Figure 6 plots the model results for Comparative Example 3 and Inventive Example 4, along with the ideal uniform flow condition. Table 2 below tabulates the numeric values obtained from these plots for the deficiency areas in these examples. The pressure drop from the shell inlet to the bundle baffle was also determined and presented in Table 2.

**Table 2. Comparison of pressure drop and flow distributions**

| Example # | Pressure drop (inches water column) | % fibres with f_{c} < 0.5 | % fibres with f_{c} < 1.0 | A_{lower} | Aᵤₚₚₑᵣ | Aₜₒₜₐₗ |
|---|---|---|---|---|---|---|
| Comparative Example 3 | 11.6 | 16% | 56% | 0.19 | 0.20 | 0.39 |
| Inventive Example 4 | 21.6 | 3.4% | 60% | 0.15 | 0.16 | 0.31 |

Inventive Example 4 showed more balanced shell side flow than Comparative Example 3. Thus again, the inventive module showed an improvement in fluid flow distribution compared to the conventional module. However, the inventive module also showed a significant increase in pressure drop.

Actual hollow fibre membrane modules were then fabricated in a like manner to the modeled Comparative Example 3 and Inventive Example 4. And these modules were tested in a pilot facility under similar conditions to those assumed in the modeling (e.g. 12 m³/hour feed). In preliminary testing to date, the pressure drop observed in these modules closely matched that predicted by the CFD modeling. And consequently, this provides a high level of confidence in the other CFD predictions. Table 3 below shows the pressure drops measured from the shell inlet to the shell outlet for the actual modules and compares them to those predicted by CFD. (Note that Table 2 shows the expected pressure drops over ½ the length of a module. Thus, the expected pressure drops in Table 3 are twice those presented in Table 2.)

**Table 3. Comparison of pressure drops between actual and modeled examples**

| Example # | Actual pressure drop (inches water column) | Modeled pressure drop (inches water column) |
|---|---|---|
| Comparative Example 3 | 24.9 | 23.3 |
| Inventive Example 4 | 41.6 | 43.2 |

## Claims

1. Use of a hollow fibre membrane module for osmotic membrane distillation of a fluid, the hollow fibre membrane module (1) having a shell-side configuration comprising:
a hollow fibre bundle (2) comprising a plurality of hollow fibre membranes (3);
a perforated hollow internal core (4) inside the bundle;
at least one plug (5) located part way within the internal core (4) and such that there is at least one perforation on either side of the plug (5);
a housing (7) comprising a shell (8), shell ends (9a, 9b), a shell inlet (10) for a shell fluid, a shell outlet (11) for the shell fluid; and a lumen outlet (13) for a lumen fluid, wherein the housing (7) contains the hollow fibre bundle (2) and internal core (4), the shell inlet (10) is fluidly connected to one end of the internal core (4), the shell outlet (11) is fluidly connected to the other end of the internal core (4), and the lumen outlet (13) is fluidly connected to an end of each hollow fibre membrane (3);
seals (14) within the housing (7) preventing fluid communication between the shell fluid and the lumen fluid; and
at least one bundle baffle (15) within the hollow fibre bundle (2) between at least one perforation on the shell inlet side of the internal core (4) and at least one perforation on the shell outlet side of the internal core (4);
wherein the membrane module (1) comprises at least one flow distributor within the hollow internal core (4),
wherein the housing (7) comprises a lumen inlet (12) for the lumen fluid and the lumen inlet is fluidly connected to the other end of each hollow fibre membrane (3), and
wherein the flow distributor comprises a core baffle (20, 21).

2. Use of a hollow fibre membrane module (1) of claim 1,
wherein the plug (5) and the bundle baffle (15) are aligned and located in the centre of the module (1),
and/or wherein the membrane module (1) comprises at least one flow distributor within the hollow internal core (4) on each side of the plug (5).

3. Use of a hollow fibre membrane module (1) of claim 1 wherein the membrane module (1) comprises more than one flow distributor within the hollow internal core (4) in series on the shell inlet side of the plug (5).

4. Use of a hollow fibre membrane module (1) of claim 3 wherein each distributor in series provides an increasing restriction to flow in the direction from the shell inlet (10) to the plug (5).

5. Use of a hollow fibre membrane module (1) of claim 1 wherein the membrane module (1) comprises more than one flow distributor within the hollow internal core (4) in series on the shell outlet side of the plug (5).

6. Use of a hollow fibre membrane module (1) of claim 5 wherein each distributor in series provides an increasing restriction to flow in the direction from the plug (5) to the shell outlet (11).

7. Use of a hollow fibre membrane module (1) of claim 1 wherein the flow distributor comprises locating tabs attached to the periphery of the core baffle (20, 21) to locate the core baffle (20, 21) centrally with respect to the walls of the internal core (4).

8. Use of a hollow fibre membrane module (1) of claim 1 wherein the core baffle (20, 21) is double cone shaped with the axes of the cones aligned along the axis of the internal core (4).

9. Use of a hollow fibre membrane module (1) of claim 1, wherein the core baffle (20, 21) has the shape of a teardrop, football, truncated cone, single cone, spear point or truncated spear point shape.

10. Use of a hollow fibre membrane module (1) of claim 9 wherein the angles of the double cones with respect to the cone axes are about 30 degrees.

11. Use of a hollow fibre membrane module (1) of claim 1 wherein the flow distributor comprises a plate (32a, 33a, 34a, 32b, 33b, 34b) having an orifice, wherein the plate (32a, 33a, 34a, 32b, 33b, 34b) is located against the inner wall of the internal core (4).

12. Use of a hollow fibre membrane module (1) of claim 1 wherein the flow distributor is helical-shaped.

13. Use of a hollow fibre membrane module (1) of claim 3 wherein the flow distributor is located at about 1/6 of the distance between the shell inlet (10) and the plug (5) in the internal core (4).

14. Use of a hollow fibre membrane module (1) of claim 1 wherein the perforations in the internal core (4) are asymmetric on opposite sides of the plug (5),
and/or wherein the perforations in the internal core (4) are non-uniform on the same side of the plug (5),
and/or comprising more than one plug (5) located part way through the internal core (4) and such that there is at least one perforation on either side of each plug (5),
and/or wherein the packing density of the hollow fibre membranes (3) is lower at the centre of the bundle (2) than at the perimeter of the bundle (2),
and/or comprising a tie rod connecting the flow distributor to the plug (5).

## Patentansprüche

1. Verwendung eines Hohlfasermembranmoduls zur osmotischen Membrandestillation eines Fluids, wobei das Hohlfasermembranmodul (1) einen schalenseitigen Aufbau hat mit:
einem Hohlfaserbündel (2) mit einer Vielzahl Hohlfasermembranen (3),
einem perforierten hohlen inneren Kern (4) innerhalb des Bündels,
wenigstens einem Verschluss (5), der innerhalb des inneren Kerns (4) und so angeordnet ist, dass sich wenigstens eine Perforation auf jeder Seite des Verschlusses (5) befindet,
einem Gehäuse (7) mit einer Schale (8), Schalenenden (9a, 9b), einem Schaleneinlass (10) für ein Schalenfluid, einem Schalenauslass (11) für das Schalenfluid, und einem Lumenauslass (13) für ein Lumenfluid, wobei das Gehäuse (7) die Hohlfaserbündel (2) und den inneren Kern (4) enthält, der Schaleneinlass (10) fluidleitend mit einem Ende des inneren Kerns (4) verbunden ist, der Schalenauslass (11) fluidleitend mit dem anderen Ende des inneren Kerns (4) verbunden ist, und der Lumenauslass (13) fluidleitend mit einem Ende jeder Hohlfasermembran (3) verbunden ist,
Dichtungen (14) innerhalb des Gehäuses (7), die eine Fluidverbindung zwischen dem Schalenfluid und dem Lumenfluid unterbinden, und
zumindest einer Bündelprallplatte (15) innerhalb des Hohlfaserbündels (2) zwischen wenigstens einer Perforation auf der Schaleneinlassseite des inneren Kerns (4) und wenigstens einer Perforation auf der Schalenauslassseite des inneren Kerns (4),
wobei das Membranmodul (1) wenigstens einen Strömungsverteiler innerhalb des hohlen inneren Kerns (4) aufweist,
wobei das Gehäuse (7) einen Lumeneinlass (12) für das Lumenfluid aufweist und der Lumeneinlass fluidleitend mit dem anderen Ende jeder Hohlfasermembran (3) verbunden ist, und
wobei der Strömungsverteiler eine Kernprallplatte (20, 21) aufweist.

2. Verwendung eines Hohlfasermembranmoduls (1) nach Anspruch 1,
wobei der Verschluss (5) und die Bündelprallplatte (15) fluchten und in der Mitte des Moduls (1) angeordnet sind,
und/oder wobei das Membranmodul (1) zumindest einen Strömungsverteiler innerhalb des hohlen inneren Kerns (4) auf jeder Seite des Verschlusses (5) aufweist.

3. Verwendung eines Hohlfasermembranmoduls (1) nach Anspruch 1, wobei das Membranmodul (1) auf der Schaleneinlassseite des Verschlusses (5) mehr als einen Strömungsverteiler hintereinander innerhalb des hohlen inneren Kerns (4) aufweist.

4. Verwendung eines Hohlfasermembranmoduls (1) nach Anspruch 3, wobei jeder hintereinander angeordnete Verteiler eine zunehmende Strömungseinschränkung in der Richtung von dem Schaleneinlass (10) zum Verschluss (5) bereitstellt.

5. Verwendung eines Hohlfasermembranmoduls (1) nach Anspruch 1, wobei das Membranmodul (1) auf der Schalenauslassseite des Verschlusses (5) mehr als einen Strömungsverteiler hintereinander innerhalb des hohlen inneren Kerns (4) aufweist.

6. Verwendung eines Hohlfasermembranmoduls (1) nach Anspruch 5, wobei jeder hintereinander angeordnete Verteiler eine zunehmende Strömungseinschränkung in der Richtung von dem Verschluss (5) zum Schalenauslass (11) bereitstellt.

7. Verwendung eines Hohlfasermembranmoduls (1) nach Anspruch 1, wobei der Strömungsverteiler Zentrierlaschen aufweist, die am Umfang der Kernprallplatte (20, 21) befestigt sind, um die Kernprallplatte (20, 21) mittig bezüglich der Wände des inneren Kerns (4) anzuordnen.

8. Verwendung eines Hohlfasermembranmoduls (1) nach Anspruch 1, wobei die Kernprallplatte (20, 21) doppelkonusförmig ist mit den Achsen der Konen ausgerichtet längs der Achse des inneren Kerns (4).

9. Verwendung eines Hohlfasermembranmoduls (1) nach Anspruch 1, wobei die Kernprallplatte (20, 21) die Form einer Träne, eines Fußballs, eines Kegelstumpfes, eines Einzelkonus, einer Speerspitze oder eines Speerspitzenstumpfes hat.

10. Verwendung eines Hohlfasermembranmoduls (1) nach Anspruch 9, wobei die Winkel des Doppelkonus bezüglich der Konusachsen ungefähr 30° betragen.

11. Verwendung eines Hohlfasermembranmoduls (1) nach Anspruch 1, wobei der Strömungsverteiler eine Platte (32a, 33a, 34a, 32b, 33b, 34b) mit einer Öffnung hat, wobei die Platte (32a, 33a, 34a, 32b, 33b, 34b) gegen die Innenwand des inneren Kerns (4) angeordnet ist.

12. Verwendung eines Hohlfasermembranmoduls (1) nach Anspruch 1, wobei der Strömungsverteiler schraubenförmig ist.

13. Verwendung eines Hohlfasermembranmoduls (1) nach Anspruch 3, wobei der Strömungsverteiler an ungefähr 1/6 der Distanz zwischen dem Schaleneinlass (10) und dem Verschluss (5) in dem inneren Kern (4) angeordnet ist.

14. Verwendung eines Hohlfasermembranmoduls (1) nach Anspruch 1, wobei die Perforationen in dem inneren Kern (4) auf entgegengesetzten Seiten des Verschlusses (5) asymmetrisch sind,
und/oder wobei die Perforationen in dem inneren Kern (4) auf derselben Seite des Verschlusses (5) ungleichförmig sind,
und/oder umfassend mehr als einen Verschluss (5) innerhalb des inneren Kerns (4), derart, dass sich wenigstens eine Perforation auf jeder Seite jedes Verschlusses (5) befindet,
und/oder wobei die Packdichte der Hohlfasermembranen (3) im Zentrum des Bündels (2) niedriger ist als am Umfang des Bündels (2),
und/oder umfassend eine Spannstange, welche den Strömungsverteiler mit dem Verschluss (5) verbindet.

## Revendications

1. Utilisation d'un module à membrane fibreuse creuse pour la distillation par membrane osmotique d'un fluide, le module à membrane fibreuse creuse (1) ayant une configuration côté enveloppe comprenant :
un faisceau fibreux creux (2) comprenant une pluralité de membranes fibreuses creuses (3) ;
une partie centrale interne creuse perforée (4) à l'intérieur du faisceau ;
au moins un bouchon (5) situé à mi-chemin à l'intérieur de la partie centrale interne (4) et de sorte qu'il existe au moins une performation sur chaque côté du bouchon (5) ;
un logement (7) comprenant une enveloppe (8), des extrémité d'enveloppe (9a, 9b), une entrée d'enveloppe (10) pour un fluide d'enveloppe, une sortie d'enveloppe (8) pour le fluide ; et une sortie de lumière (13) pour un fluide de lumière, le logement (7) contenant le faisceau fibreux creux (2) et la partie centrale interne (4), l'entrée d'enveloppe (10) étant en communication fluidique avec une extrémité de la partie centrale interne (4), la sortie d'enveloppe (11) étant en communication fluidique avec l'autre extrémité de la partie centrale interne (4), et la sortie de lumière (13) étant en communication fluidique avec une extrémité de chaque membrane fibreuse creuse (3) ;
des joints (14) à l'intérieur du logement (7) empêchant la communication fluidique entre le fluide d'enveloppe et le fluide de lumière ; et
au moins un déflecteur de faisceau (15) à l'intérieur du faisceau fibreux creux (2) entre au moins une perforation sur le côté intérieur d'enveloppe de la partie centrale interne (4) et au moins une perforation sur le côté sortie d'enveloppe de la partie centrale interne (4) ;
le module à membrane (1) comprenant au moins un distributeur à l'intérieur de la partie centrale interne creuse (4),
le logement (7) comprenant une entrée de lumière (12) pour le fluide de lumière et l'entrée de lumière étant en communication fluidique avec l'autre extrémité de chaque membrane fibreuse creuse (3), et
le distributeur comprenant un déflecteur central (20, 21).

2. Utilisation d'un module à membrane fibreuse creuse (1) selon la revendication 1, le bouchon (5) et le déflecteur de faisceau (15) étant alignés et situés au centre du module (1),
et/ou le module à membrane (1) comprenant au moins un distributeur à l'intérieur de la partie centrale interne creuse (4) de chaque côté du bouchon (5).

3. Utilisation d'un module à membrane fibreuse creuse (1) selon la revendication 1, le module à membrane (1) comprenant au moins un distributeur à l'intérieur de la partie centrale interne creuse (4) monté en série sur le côté entrée d'enveloppe du bouchon (5).

4. Utilisation d'un module à membrane fibreuse creuse (1) selon la revendication 3, chaque distributeur monté en série assurant la réduction croissante d'écoulement dans le sens partant de l'entrée d'enveloppe (10) vers le bouchon (5).

5. Utilisation d'un module à membrane fibreuse creuse (1) selon la revendication 1, le module à membrane (1) comprenant au moins un distributeur à l'intérieur de la partie centrale interne creuse (4) monté en série sur le côté sortie d'enveloppe du bouchon (5).

6. Utilisation d'un module à membrane fibreuse creuse (1) selon la revendication 5, chaque distributeur monté en série assurant la réduction croissante d'écoulement dans le sens partant du bouchon (5) vers la sortie d'enveloppe (11).

7. Utilisation d'un module à membrane fibreuse creuse (1) selon la revendication 1, le distributeur comprenant des languettes d'emplacement fixées sur la périphérie du déflecteur central (20, 21) pour positionner le déflecteur central (20, 21) au centre par rapport aux parois de la partie centrale interne (4).

8. Utilisation d'un module à membrane fibreuse creuse (1) selon la revendication 1, le déflecteur central (20, 21) étant en forme de double cône, les axes des cônes étant alignés le long de l'axe de la partie centrale interne (4).

9. Utilisation d'un module à membrane fibreuse creuse (1) selon la revendication 1, le déflecteur central (20, 21) ayant la forme d'une larme, de ballon de foot, de cône tronqué, de cône unique, de pointe lance ou en forme de pointe lance tronquée.

10. Utilisation d'un module à membrane fibreuse creuse (1) selon la revendication 9, les angles des doubles cônes par rapport aux axes de cône étant d'environ 30 degrés.

11. Utilisation d'un module à membrane fibreuse creuse (1) selon la revendication 1, le distributeur comprenant une plaque (32a, 33a, 34a, 32b, 33b, 34b) ayant un orifice, la plaque (32a, 33a, 34a, 32b, 33b, 34b) étant située contre la paroi interne de la partie centrale interne (4).

12. Utilisation d'un module à membrane fibreuse creuse (1) selon la revendication 1, le distributeur étant hélicoïdal.

13. Utilisation d'un module à membrane fibreuse creuse (1) selon la revendication 3, le distributeur étant situé à 1/6 de la distance entre l'entrée d'enveloppe (10) et le bouchon (5) de la partie centrale interne (4).

14. Utilisation d'un module à membrane fibreuse creuse (1) selon la revendication 1, les performations dans la partie centrale interne (4) étant asymétriques sur les côtés opposés du bouchon (5),
et/ou les performations dans la partie centrale interne (4) étant non uniformes sur le même côté du bouchon (5),
et/ou comprenant au moins un bouchon (5) situé à mi-chemin dans la partie centrale interne (4) et de sorte qu'il existe au moins une performation de chaque côté de chaque bouchon (5),
et/ou la compacité des membranes fibreuses creuses (3) étant inférieure au centre du faisceau (2) à celle du périmètre du faisceau (2),
et/ou comprenant une tige de liaison pour relier le distributeur au bouchon (5).
